# EUROPEAN PATENT APPLICATION

(11) **EP 3 798 129 A1**
(43) Date of publication of application: **31.03.2021**
(21) Application number: 19290096.7
(22) Date of filing: 30.09.2019
(51) Int. Cl.: B64D 27/24, B64D 27/02

(54) **ELECTRIC MOTOR FOR A PROPELLER ENGINE**

(71) Applicant: Ratier-Figeac SAS, 46101 Figeac Cedex (FR)
(72) Inventor: Seminel, Bruno, 46100 Figeac (FR)
(74) Representative: Dehns

(57) **Abstract**

An aircraft engine (16) having a propeller (18) assembly comprising one or more propellers (18), wherein the engine (16) further comprises an electric motor (30) configured to drive the propellers (18), wherein the electric motor (30) is configured in a mode of operation to reverse the direction of rotation of the propellers (18), so as to provide a reverse thrust.

## Description

### FIELD

The present disclosure relates generally to an electric motor for an aircraft propeller.

### BACKGROUND

Medium-sized propeller aircraft are typically equipped with a single power plant on each wing, wherein the propellers used on such aircraft are typically variable pitch to allow operation at one or a few (e.g., small number of) substantially constant predetermined RPM(s). On existing aircraft the variation of pitch may be achieved using an electro-hydro-mechanic system.

The change in angle of attack of the propeller blades allows variation of torque so as to drive the propeller and, consequently, vary the propeller RPM for a given engine power. The control of the propeller can be achieved via real-time monitoring of the propeller RPM, and adjusting propeller pitch. In various arrangements, the propulsion system may be designed to operate at a number of preset speeds, each of which corresponds to a constant preset RPM. One of the reasons to operate at preset speeds may be so that the engine operates efficiently in various optimised regimes. In addition, engines (as well as propellers) have critical resonant frequencies and the preset speeds can be optimised to ensure that they are outside of the resonant frequencies of the engine.

Modern propellers typically include a thrust reversing capability as part of the variable pitch mechanism. That is, the propeller pitch can be reversed so as to

On conventional variable-pitch propellers, the blades can be rotated so that they are substantially parallel to the direction of incoming airflow. This can help to prevent rotation of the propeller and reduce drag in some modes of operation, such as upon failure or shutdown of the engine (which may be in-flight, taxiing, or at rest). This is typically referred to as feathering. Feathering the propeller on an inoperative engine reduces drag, and in the case of a multi-engine aircraft can help the aircraft maintain speed and altitude using the remaining, operative engines.

A windmilling mode of a fan assembly (such as a propeller assembly) may correspond to a mode in which there is no driving force applied to the fans (e.g., propellers). As such, they will spin due to the incoming airflow, and the rotational speed of the fan will be a function of the speed of the airflow across the fan assembly. However, airspeed is not the only parameter that drives windmilling speed; altitude and temperature matter as well. For example, the greater the airspeed, the greater the rotational speed of the fan.

The recent trends in propulsion systems for aircraft include a desire to incorporate, wherever possible, electric propulsion as part (or the entirety) of an engine power plant on the aircraft. This has led to various considerations of how to adapt existing variable pitch and other systems for use with electric propulsion mechanisms, and the technology disclosed herein is aimed at addressing such considerations.

### SUMMARY

In accordance with an aspect of the disclosure there is provided an aircraft engine having a propeller assembly comprising one or more propellers, wherein the engine further comprises an electric motor configured to drive the propellers, wherein the electric motor is configured in a mode of operation to reverse the direction of rotation of the propellers, so as to provide a reverse thrust.

It has been discovered that the characteristics of an electric motor could be used to provide a beneficial reverse thrust mode when incorporating an electric motor into a propeller assembly as described above.

The reverse thrust mode of operation of the engine may be configured to decelerate the propellers to zero RPM from movement in a first rotational direction, and then accelerate the propellers back to an operating RPM in a second, opposite rotational direction. This defines further the nature of the reverse thrust mode in various embodiments of the disclosure.

The first rotational direction of the propellers may be configured to provide forward thrust, and the second rotational direction of the propellers may be configured to provide backward thrust.

The first rotational direction of the propellers may be configured to provide forward thrust for an aircraft to which the engine is attached, and the second rotational direction of the propellers may be configured to propel the aircraft backwards in a reverse direction, for example when the aircraft is on the ground.

In accordance with an aspect of the disclosure there is provided an aircraft engine having a propeller assembly comprising one or more propellers, wherein the engine further comprises an electric motor configured to drive the propellers, wherein the electric motor is configured in a mode of operation to vary a rotational speed of the propellers in use.

It has been discovered that the rotational speed of the propellers could be easily varied during flight using the characteristics of an electric motor. For example, the rotational speed may be varied during a cruise condition of the aircraft to which the engine is attached, for example at a cruise altitude. The rotational speed could be varied in a stepwise manner, for example increased or decreased in step changes amounting to a value between about 1 % and about 5% of a current rotational speed of the propellers. This is not possible (or at least is very difficult) with conventional gas turbine engines.

The electric motor may be configured to vary the rotational speed and/or driving torque of the propellers in response to a varying torque and/or power demand of the propellers, such as a varying airspeed or altitude.

In accordance with an aspect of the disclosure there is provided an aircraft engine having a propeller assembly comprising one or more propellers, wherein the engine further comprises an electric motor configured to drive the propellers, wherein the electric motor is configured in a mode of operation to recover energy by windmilling during various flight modes. It has been discovered that energy could be recovered using an electric motor that is attached to propellers of an aircraft, using the characteristics of an electric motor.

The electric motor may be used as a generator such that the windmilling (rotational) speed of the propellers may be controlled via the braking torque on the motor so as to maximise energy generation.

The flight modes may include a descent or deceleration of an aircraft to which the engine is attached.

In accordance with an aspect of the disclosure there is provided an aircraft propulsion system comprising a plurality of propeller assemblies, each being driven by a separate electric motor, and a controller configured to control the rotational speed (RPM) of each separate propeller assembly by varying and/or switching supply of electricity to each of the electric motors that drive the separate propeller assemblies. It has been discovered that the use of multiple electric motors allow easy and efficient switching of power to the various engines of an aircraft propulsion system.

The controller of the propulsion system may be configured to modify or optimise a windmilling rotational speed (RPM) of each propeller by controlling a resistive torque generated by the motor of each respective propeller assembly.

The electric motor may be configured to vary the rotational speed and/or driving torque of the propellers in response to a varying torque and/or power demand of the propellers, such as a varying airspeed or altitude.

The controller may be configured to detect a power failure in one of the electric motors that drive the separate propeller assemblies, and control a windmilling rotational speed (RPM) of the propellers associated with that electric motor having a power failure by controlling a resistive torque generated by that electric motor.

In accordance with an aspect of the disclosure there is provided an engine or propulsion system as described above, wherein the propellers are fixed pitch propellers.

In accordance with an aspect of the disclosure there is provided an engine or propulsion system as described above, wherein the propellers are propellers having a varying pitch that can be varied within a range of about 30 degrees, for example 20 degrees or even 10 degrees.

### BRIEF DESCRIPTION OF THE DRAWINGS

Various embodiments will now be described, by way of example only, and with reference to the accompanying drawings in which:
Fig. 1 shows an aircraft in accordance with various embodiments of the present disclosure; and
Fig. 2 shows a propeller engine of the aircraft of Fig. 1 in isolation.

### DETAILED DESCRIPTION

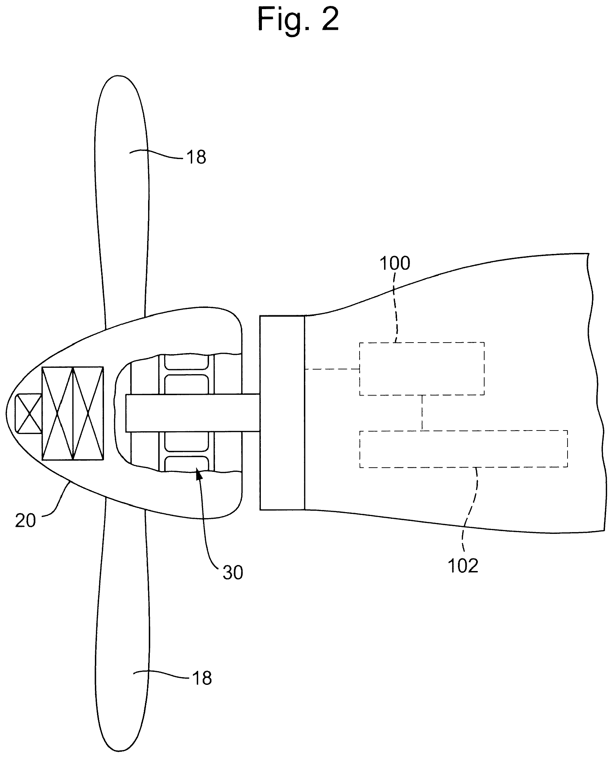

Herewith will be described various embodiments of an electrically driven propeller engine for an aircraft (which may be otherwise referred to herein as an aeroplane). Aspects of the disclosure extend to an aircraft (e.g., a fixed wing aircraft) comprising one or more propeller engines of the type described herein, and that is propelled forward by thrust from the one or more propeller engines. An electric motor is provided (e.g., as part of the propeller assembly) that may be configured to drive the one or more propeller engines. The aircraft may include a plurality of propeller engines corresponding to the propeller engine described herein. In various embodiments, each propeller engine may be configured to be driven by a single electric motor dedicated to that particular engine, as shown and described, for example, in respect of Fig. 2.

The aircraft may be of any suitable size, shape, and wing configuration. The aircraft may be for one or more of recreation, transportation of goods and/or people, military, and research. The aircraft may be one that is flown by a pilot on board the aircraft, or alternatively may be an unmanned aerial vehicle ("UAV") that can be remotely or computer-controlled, for example a drone. The technology disclosed herein may be particularly suitable for unmanned aerial vehicles.

The electric motor described herein is intended to drive a propeller having a fixed pitch directly with an electric motor, or via a gear assembly (e.g., an epicyclic gear assembly). Although the use of a propeller having a fixed pitch is envisaged, it is also envisaged that variable pitch propellers could be used, although the variable pitch propellers could have a restricted range of motion as compared to conventional variable pitch propellers, for example propellers have a varying pitch that can be varied only within a range of about 30 degrees, or even 20 degrees.

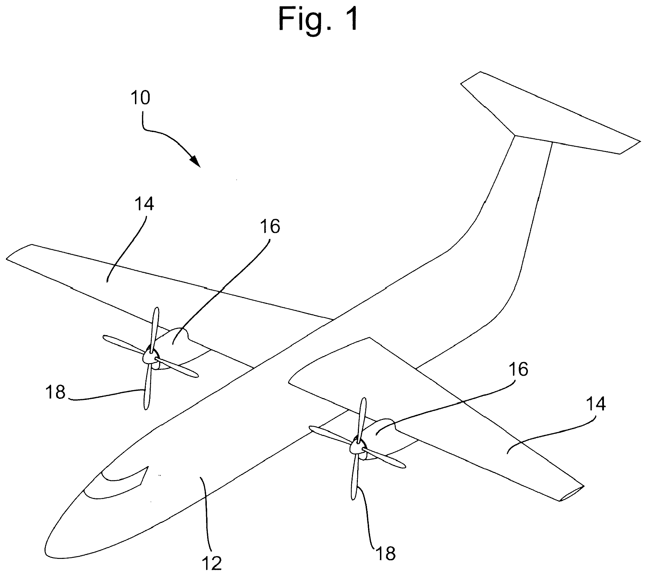

Fig. 1 shows an aircraft 10 that comprises a fuselage 12 and a pair of fixed wings 14 extending from the fuselage 12. Located on each wing is a propeller engine 16, each of which is configured to drive a propeller assembly that comprises a multiple of propellers 18.

Fig. 2 shows the propeller engine 16 in isolation and schematically, from which it can be seen the propellers 18 extend from a rotating propeller hub 20. The engine 16 comprises an electric motor 30 configured to rotate the propellers 18 to provide thrust for the aircraft 10. Although there may be a drive shaft between the electric motor 30 and propellers 18, in various embodiments the motor 30 is installed in the propeller hub 20 to directly drive the rotation of the propeller hub 20 and propellers 18, which removes the need for the drive shaft and other additional components.

The engine 16 may further comprise a motor controller 100 (e.g., processor or circuitry) configured to control operation of the electric motor 30. Although the controller 100 is shown as being incorporated within the engine 16 in Fig. 3, this may not be the case and the controller 100 could at least partially be incorporated remotely, for example as part of an engine management system of the aircraft 10. The engine management system may be located anywhere on the aircraft 10, for example in the cockpit, or even (e.g., in the case of an unmanned aerial vehicle) remotely from the aircraft. Part of the motor controller 100 may be located within the engine 16 (e.g., the driving electronics) and part of the controller 100 (e.g., a control system for controlling the driving electronics) could be located at a remote location, for example elsewhere on the aircraft 10 or remotely from the aircraft 10.

The engine 16 may further comprise one or more power sources 102, for example one or more batteries, fuel cells, supercapacitor, or an auxiliary power unit ("APU"), optionally with a thermal engine acting as the power source 102, etc.

It has been noted that for environmental, and fuel attrition reasons the trend (as discussed above) for human or goods transportation is towards hybrid and electric propulsion, and such technologies are already in production for ground transportation, such as cars, trucks, etc. In hybrid and electric propulsion, one or more fan assemblies are generally driven by electric motors, using electrical power generation and/or storage (e.g., batteries or fuel cells or others as stated above and elsewhere herein).

The present disclosure is aimed at developing this further for aerospace applications, and in particular developing the technology for use with a propeller engine, such as engine 16 shown in Figs. 1 and 2.

It has been noted that certain characteristics of an electric motor are quite different to those of internal combustion engines. For example, the torque characteristics of an electric motor are generally quite flat or constant, in that an electric motor delivers a substantially constant torque from rest (or zero RPM) and through to its maximum RPM. In addition, the direction of rotation may be reversed, which is not typically the case for an internal combustion engine, and certainly not a gas turbine engine. Furthermore, an electric motor can in certain operating modes operate as a generator and provide a controllable torque that is configured to resist rotation of the rotor thereof.

It has been recognised that such characteristics may be beneficial to aircraft propulsion systems, and in particular propeller engines, and the present disclosure is aimed at adapting a propeller engine so that it is can take advantage of these characteristics.

Aspects of the present disclosure are directed to driving a propeller assembly using an electric motor, wherein one or more propellers of the propeller assembly have a fixed pitch. This is in contrast to most modern propeller assemblies, which all use variable pitch propellers for the reasons discussed in the background section above. However, it has been discovered that using an electric motor, and taking into account the characteristics thereof, a fixed pitch propeller arrangement leads to various technical effects that are discussed in more detail below. In addition, this allows various improvements in the modes of operation of the propeller assembly.

Although the use of a propeller having a fixed pitch is envisaged, it is also envisaged that the same technical effects could be achieved with variable pitch propellers, although the variable pitch propellers could have a restricted range of motion as compared to conventional variable pitch propellers, for example propellers have a varying pitch that can be varied only within a range of about 30 degrees, or even 20 degrees.

Referring back to Fig. 2, the propellers 18 may be of a fixed pitch, meaning that the blade pitch of the propellers 18 is fixed and cannot be changed (which would normally be done by rotating the propellers about their longitudinal axis from the propeller hub 20). However, it has been discovered that using an electric motor means that this variable pitch operation may not be necessary.

For example, the controller 100 can easily cause the electric motor 30 to change the rotational speed of the propeller hub 20 (e.g., using a power loop within the circuitry of the controller 100), such that the RPM of the propeller hub 20 and propellers 18 is variable. Accordingly, the RPM can be varied with the power demand of the propellers 18, for example varied with a varying airspeed, altitude, etc. This arrangement will guarantee that the angle of attack of the propellers 18 can remain in an optimised operating range, for example so that stall cannot occur and drag forces are reduced. The optimum angle of attack range of a propeller blade is a function of air vehicle airspeed and rotational speed of the propeller, and the proposal herein is to use a fixed pitch propeller, but modify the rotational speed of the propeller using the controller 100 and electric motor 30. Such arrangements are based on the recognition that an electric motor can be combined with a propeller assembly to overcome the need to have a variable pitch propeller, whilst still allowing variation of torque and operation of the engine efficiently in various optimised regimes (and more so than with a variable pitch mechanism).

Aspects of the disclosure are directed, therefore, to an aircraft engine having a propeller assembly comprising one or more propellers, wherein the engine further comprises an electric motor configured to drive the propellers, wherein the one or more propellers are fixed pitch propellers and the electric motor is configured in a mode of operation to vary the rotational speed of the propellers so as to move the angle of attack of the propellers into a desired range, for example an optimised operating range in which drag forces are reduced and/or stall cannot occur. A controller may control the electric motor and may determine the desired range of angle of attack based on the operating conditions such as air vehicle airspeed and rotational speed of the propellers.

In a further mode of operation, which may be used in combination with or alternatively to the variable speed motor described above, the electric motor 30 can be used to reverse the direction of rotation of the propeller hub 20 and propellers 18, so as to provide a reverse thrust capability. It has been recognised that the torque characteristics of an electric motor mean that the propeller hub 20 and propellers 18 could be quickly decelerated to zero RPM from rotation in a first direction, and then effectively accelerated back to an operating RPM in a second direction (e.g., wherein the second direction is a reverse thrust direction). This is contrary to the general teaching in the art, which is that reverse thrust is only achieved using either thrust reverser actuation system (i.e., redirecting airflow) or variable pitch mechanisms.

The controller 100 may be configured to receive a command that the engine 16 should be operated in a thrust reversing mode, and upon receiving such command may decelerate the propellers 18 from a first rotational direction down to zero RPM, and then (e.g., immediately) accelerate the propellers 18 in a second rotational direction up to a sufficient RPM to provide a thrust reversing capability (e.g., so that a speed of the aircraft 10 reduces but may also be to offer capability to backup aircraft). The first rotational direction of the propellers 18 may be configured to drive the aircraft 10 forwards, whilst the second rotational direction of the propellers 18 may be configured to brake, decelerate or slow the aircraft 10. In various embodiments, the second rotational direction of the propellers 18 may be configured to propel the aircraft 10 in a reverse direction.

The controller 100 may be configured to operate the electric motor 30 so that it provides a controlled (e.g., constant) braking torque, and may be configured to control the motor 30 such that the motor RPM increases in the reverse direction in line with the reverse thrust demand of any particular situation. These modes of operation permit a fast transition from forward thrust to reverse thrust, and are based on the recognition that the high torque of the electric motor is able to provide this quick transition even at high airspeed or landing speeds of the aircraft, or at low propeller RPMs.

In a further mode of operation, which may be used in combination with or alternatively to any of the modes of operation described above, the electric motor 30 may be configured to recover energy during various flight modes, such as descent or deceleration of the aircraft 10. In such situations, the electric motor 30 could be used as a generator and the windmilling speed of the propellers 18 could be controlled via the braking torque on the motor 30 to maximise energy generation. In this mode of operation the recovered energy from the propellers 18 could be used to charge one or more batteries or supercapacitors (e.g., as part of power source 102), and/or could be used to provide power or additional power to any electrically operated component or system of the aircraft 10. The propellers 18 in this situation may conveniently act as an airbrake, so that the existing air brakes on the aircraft 10 could be reduced in size or removed. The controller 100 may be configured to control operation of the electric motor 30 during the energy recovery mode. For example, the controller 100 may be configured to modify the rotational speed of the propellers 18 so as to vary the angle of attack (which as discussed above is a function of air vehicle airspeed and rotational speed of the propeller) until it is optimised to achieve a desired and/or maximum power generation during the energy recovery mode. In embodiments including propellers of a variable pitch, the controller 100 could be configured to vary a pitch of the propellers 18 so as to vary the angle of attack until it is optimised to achieve a desired and/or maximum power generation during the energy recovery mode.

In a further mode of operation, which may be used in combination with or alternatively to any of the modes of operation described above, and in the case of a multiple propulsion system aircraft (e.g., multiple electrically driven propeller assemblies), a controller (e.g., a processor or circuitry) of the propulsion system may be configured to control the RPM of each separate propeller assembly, for example by varying and/or switching supply of electricity to each of the electric motors 30 that drive the separate propeller assemblies. The controller of the propulsion system may be configured to vary and/or switch supply of electricity to each of the electric motors 30 based on the electrical demand from each of the electric motors 30, for example due to electrical supply loss to one of the motors.

For example, an electrical load of each of the electric motors 30 (e.g., on the motor phases thereof) of the separate propeller assemblies could be varied or switched by the controller of the propulsion system. In the case of varying the load, this may be useful in order to control the RPM of one or more of the separate power plants if they are propeller driven and in a windmilling mode. The varying could be achieved using a pulse width modulation type switching.

In the case of an electrical supply loss of one or more motors 30 of the propulsion system and, as explained above, the corresponding propeller(s) 18 may start windmilling which can cause excessive drag or speed of the propellers 18. The controller of the propulsion system may be configured to control propeller windmilling rotational speed (RPM) through control of the resistive torque generated by the respective motor. This can result in safe control of the aircraft 10 by maintaining a desired RPM even in the result of electric supply loss of one or more of the electric motors 30. This mode of operation could be used in the situation of a power failure, for example loss of one or more phases of one of the electric motors 30 or loss of electric power to a controller 100 of one of the electric motors 30 that may prevent normal operation. The power (e.g., phases) may be lost by, e.g., wire breakage or transistor failure in the controller 100 electronics. This could be used as a replacement for a feathering function of the propeller(s) 18 (as may have been done previously), for example to maintain a desired RPM of the propeller(s) 18 to avoid risk of excessive rotational speed and excessive drag generation on the propellers that are connected to a motor having an electricity supply loss. In this case, the controller 100 may have a redundant electrical supply dedicated to powering of its control functions. Control of windmilling propeller RPM can be achieved by the controller 100 varying the resistive loads connected to the different phases of the respective motor.

The removal of the need to have variable pitch propellers permits use of different types of retention systems for the propellers 18 within the hub 20, since (for example) bearings will no longer be necessary. As such, the propellers 18 themselves may be stiffer, or use different (e.g., softer) retention mechanisms that provide easy installation and removal of the propellers 18. This may result in reducing resonant frequencies of the propellers 18 (or even avoiding them altogether), since the degree of freedom in installing the propellers 18 is greatly increased. Even if a reduced amount of resonant frequencies of the propellers 18 remained, it is envisaged that the controller 100 could quickly change the speed of the propellers 18 so that they avoid the critical frequency range, by a very quick command being sent to the electric motor 30. For example, the controller 100 could perform a step change of propeller RPM to move across the critical frequency range quickly.

In the case of an aircraft having multiple propeller assemblies, a controller of the propulsion system (comprising each of the propeller assemblies) could be configured to implement step changes of propeller RPM engine by engine, or the engines could be split into groups and the controller of the propulsion system could be configured to implement step changes of propeller RPM group by group. For example, a controller of the propulsion system could be configured to perform a step decrease and lower RPM on two (e.g., symmetric) propeller assemblies, while another two (e.g., symmetric) propeller assemblies perform a step increase so that total net thrust at aircraft level is constant. This could be used to avoid critical (resonant) frequency ranges while maintaining a constant overall power thrust of the propulsion system. Of course, this will be optimum for aircraft configurations having an even number, for example four or more propeller assemblies so as to maintain a symmetry of thrust across the width of the aircraft.

Although the present disclosure has been described with reference to various embodiments, it will be understood by those skilled in the art that various changes in form and detail may be made without departing from the scope of the invention as set forth in the accompanying claims.

## Claims

1. An aircraft engine having a propeller assembly comprising one or more propellers, wherein the engine further comprises an electric motor configured to drive the propellers, wherein the electric motor is configured in a mode of operation to reverse the direction of rotation of the propellers, so as to provide a reverse thrust.

2. An engine as claimed in claim 1, wherein the reverse thrust mode of operation of the engine is configured to decelerate the propellers to zero RPM from movement in a first rotational direction, and then accelerate the propellers back to an operating RPM in a second, opposite rotational direction.

3. An engine as claimed in claim 2, wherein the first rotational direction of the propellers is configured to provide forward thrust, and the second rotational direction of the propellers is configured to provide backward thrust.

4. An engine as claimed in claim 2, wherein the first rotational direction of the propellers is configured to provide forward thrust for an aircraft to which the engine is attached, and the second rotational direction of the propellers is configured to propel the aircraft backwards in a reverse direction, for example when the aircraft is on the ground.

5. An aircraft engine having a propeller assembly comprising one or more propellers, wherein the engine further comprises an electric motor configured to drive the propellers, wherein the electric motor is configured in a mode of operation to vary a rotational speed of the propellers in use.

6. An engine as claimed in claim 5, wherein the electric motor is configured to vary the rotational speed and/or driving torque of the propellers in response to a varying torque and/or power demand of the propellers, such as a varying airspeed or altitude.

7. An aircraft engine having a propeller assembly comprising one or more propellers, wherein the engine further comprises an electric motor configured to drive the propellers, wherein the electric motor is configured in a mode of operation to recover energy by windmilling during various flight modes.

8. An engine as claimed in claim 7, wherein the electric motor is used as a generator such that the windmilling (rotational) speed of the propellers is controlled via the braking torque on the motor so as to maximise energy generation.

9. An engine as claimed in claim 7 or 8, wherein the flight modes include a descent or deceleration of an aircraft to which the engine is attached.

10. An aircraft propulsion system comprising a plurality of propeller assemblies, each being driven by a separate electric motor, and a controller configured to control the rotational speed (RPM) of each separate propeller assembly by varying and/or switching supply of electricity to each of the electric motors that drive the separate propeller assemblies.

11. An aircraft propulsion system as claimed in claim 10, wherein the controller of the propulsion system is configured to control and/or modify a windmilling rotational speed (RPM) of each propeller by controlling a resistive torque generated by the motor of each respective propeller assembly.

12. An engine as claimed in claim 10 or 11, wherein the electric motor is configured to vary the rotational speed and/or driving torque of the propellers in response to a varying torque and/or power demand of the propellers, such as a varying airspeed or altitude.

13. An engine as claimed in claim 10 ,11 or 12, wherein the controller is configured to detect a power failure in one of the electric motors that drive the separate propeller assemblies, and control and/or modify a windmilling rotational speed (RPM) of the propellers associated with that electric motor having a power failure by controlling a resistive torque generated by that electric motor.

14. An engine or propulsion system as claimed in any preceding claim, wherein the propellers are fixed pitch propellers.

15. An engine or propulsion system as claimed in any preceding claim, wherein the propellers have a varying pitch that can be varied within a range of about 30 degrees.
